# EUROPEAN PATENT SPECIFICATION

(11) **EP 2 108 567 B1**
(45) Date of publication and mention of the grant of the patent: **23.03.2011**
(21) Application number: 08006910.7
(22) Date of filing: 07.04.2008
(51) Int. Cl.: B62D 21/02

(54) **Method for obtaining a stiffening cross member for a vehicle frame and cross member obtained with such method**
Verfahren zum Herstellen eines Versteifungsquerträgers für einen Fahrzeugrahmen und anhand dieses Verfahrens hergestellter Querträger
Procédé d'obtention d'un élément transversal de raidissement pour un châssis de véhicule et élément transversal obtenu avec ce procédé

(43) Date of publication of application: 14.10.2009
(73) Proprietor: Iveco S.p.A., 10156 Torino (IT)
(72) Inventor: Hoelzle, Franz, 89257 Illertissen (DE); Giehle, Peter, 89278 Oberfahlheim (DE); Duncker, Benjamin, 89077 Ulm (DE)
(74) Representative: Borsano, Corrado

(56) References cited:
- EP-A- 0 939 021
- EP-A- 1 710 149
- JP-A- 2000 025 646
- JP-A- 2005 132 248

## Description

This invention relates to a method for obtaining a stiffening cross member for vehicle frame, in particular of a heavy vehicle, the cross member obtained with such method, and also a vehicle frame comprising such cross member.

As known in the prior art, the frames of heavy vehicles used to transport goods and/or passengers are generally constituted by side members which are transversally reinforced by one or more cross members. An example of a known frame for an heavy vehicle is disclosed in JP2005132248 A.

According to what is known in the prior art, the reinforcing cross members are generally obtained by joining more plate parts by welding, or by other fixing means. The cross members of the type known in the art are made by a main body shaped like a beam which ends at its extremities with two flanges, used for the connection of the side members to the vehicle frame.

The realization of these cross members by joining more parts is very complex, because it implies numerous steps having high realization costs.

Therefore, even if the element in itself is very simple, the assembling of a cross member comprising more flanges may be undesirably complex.

Moreover, it is known that the stresses acting on the cross member, in particular the values of the torsional load, vary when the position of the cross member itself varies along the frame. In particular, in case, for example, of the trailer of semi-trailer truck, the torsional stress acting on the frame in correspondence of the fifth wheel is considerably higher than that acting on the rear part of the frame. Therefore, the cross members of the traditional type need to have different dimensions according to the position along the frame in which they will be finally used. For this reason, it is impossible to optimize the production costs by standardizing the cross member realization process.

The main task of this invention is to provide a more effective, fast and versatile method for the realization of a cross member used for stiffening the frame of a heavy vehicle.

In the scope of this task, the aim of this invention is to provide a method for the realization of a cross member allowing to reduce the number of steps of the realization process, and in particular allowing to eliminate the step of welding the different parts composing the cross members of the type known in the art.

Moreover, the aim of this invention is to provide a method for the realization of a cross member allowing to obtain cross members having different profiles according to the position of the frame where they will be placed, as to optimize the quantity of material used.

The aim of this invention is also to provide a method for obtaining a cross member made of a single piece, adequately formed, having an improved mechanical behaviour when operating.

A further aim of this invention is to provide a cross member made of a single piece and having a profile shape easily adaptable to the different positions where it will be placed along the vehicle frame.

This task and these and other purposes that will be explained below are achieved by a method for obtaining a stiffening cross member of a vehicle frame according to Claim 1.

Further characteristics and advantages of the present invention will become clear from the following detailed description, that is merely illustrative and not limitative and is shown in the figures that are attached hereto, in which:
figure 1 shows a perspective view of a cross member according to this invention, said cross member having a first profile;
figure 2 shows a perspective view of a cross member according to this invention, said cross member having a second profile;
figure 3 shows a top view of the semi-finished product used to obtain the cross member according to this invention;
figure 4 shows a schematic top view of a vehicle frame on which more cross members according to this invention are assembled in different positions and by different assembling means;
figure 5 shows a front view of a cross member according to this invention, said cross member assembled to a vehicle frame;
figure 6 shows the same top view of figure 5 where the cross member is assembled to the vehicle frame by interposing reinforcing elements;
figure 7 shows again the same top view of figure 6 where the cross member is assembled to the vehicle frame by means of different reinforcing elements;
figure 8 shows a perspective view of a second embodiment of the cross member according to this invention;
figure 9 shows a perspective view of a further second embodiment of the cross member according to this invention;

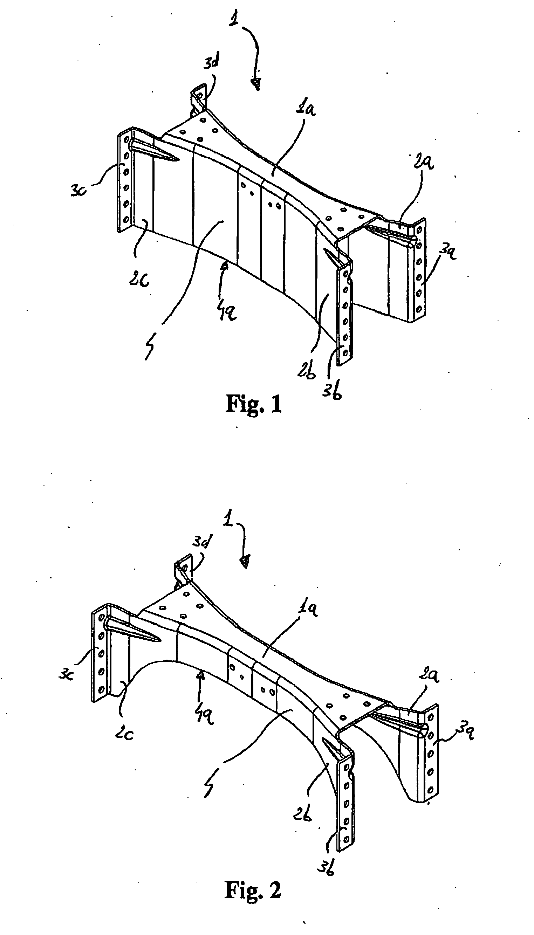

With reference to figure 1, the cross member 1 according to this invention comprises a main body 1 a connected to flanges 2a, 2b, 2c, 2d at each one of its extremities.

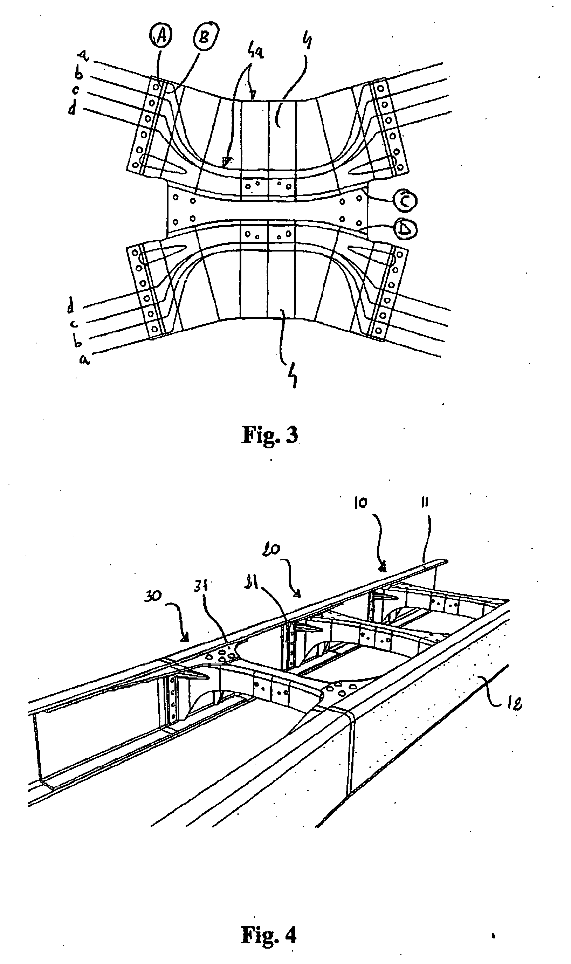

The flanges 2a, 2b, 2c, 2d allow the cross member 1 to be assembled with the side members 11 and 12 of the vehicle frame, according to what shown for example in figure 4.

Going back to figure 1, the cross member here represented has a main body 1 a characterized in that the lower profile 4a of the sides 4 is substantially solid.

Comparing figure 1 with figure 2, it is possible to see that said lower profile 4a of the sides 4 of the cross member may be further flared as to slim the main body 1 a of the cross member.

This different profile of the main body 1a of the cross member allows to optimize the use of the materials and the weight of the cross member itself, according to the loads that it will bear, once assembled to the frame.

The cross member 1 according to what shown so far is realized in a single piece which has a main body connected at its extremities to the flanges 2a, 2b, 2c, 2d, in order to be assembled with the side members 11, 12 of the frame.

According to the method for obtaining said cross member, it is necessary to prepare a preformed plate according to the profile shown in figure 3. On this plate, folding lines are already marked and follow the profile of the main body and of the flanges. This way the plate will be folded later in the final form required. For example, starting from the cut plate in figure 3, according to the process for obtaining the flange, the sides 4 of the plate have to be folded along the folding lines C e D, and then the joint part has to be shaped with other folding operations.

Figure 3 shows the cutting lines a, b, c, d, each of them defining a different lower profile 4a of the sides 4 of the cross member.

The process may be illustratively described, saying that folding the plate shown in figure 3 it is possible to obtain the cross member with the solid side profile shown in figure 1, while if the plate, before being folded, is cut along, for example, the line a or the line b of figure 3, it is possible to obtain a cross member with a tapered side profile, as in the plate shown for example in figure 2.

Therefore the method for obtaining the cross member according to this invention comprises a first step consisting in preparing a plate where appropriate folding lines are marked, and a second step consisting in folding the plate according to said folding lines in order to obtain the cross member in its final shape.

If a cross member with scrap values is required, that is a cross member with more tapered side profiles 4, before carrying out the second folding step, a further step should be carried out by cutting the plate following one of the cut lines a, b, c, d according to the desired profile.

Also, according to the use of the cross member itself, it may be assembled to the vehicle frame by using further reinforcing elements 21, 31.

Such reinforcing elements 21, 31 shown for example in figure 4 reduce the space between the two side members 11, 12 that can be used to insert the cross member.

With a cross member of the type known this different frame width makes necessary to realize cross members with different dimensions, using, therefore, different semi-finished products.

With the method according to this invention, on the contrary, it is possible to obtain cross members with different longitudinal dimensions by using the same plate blank, or by simply carrying out an additional folding operation. During the plate folding step, in fact, it is sufficient to carry out an additional folding according to the following lines A or B as to reduce the dimensions of the cross member and allow it to be placed in a position of the frame where additional reinforcing elements are not required, as in the case of the cross member 10 in figure 4, or a in a position where such additional members are required, as in the position of the cross member 20 and the cross member 30 also in figure 4.

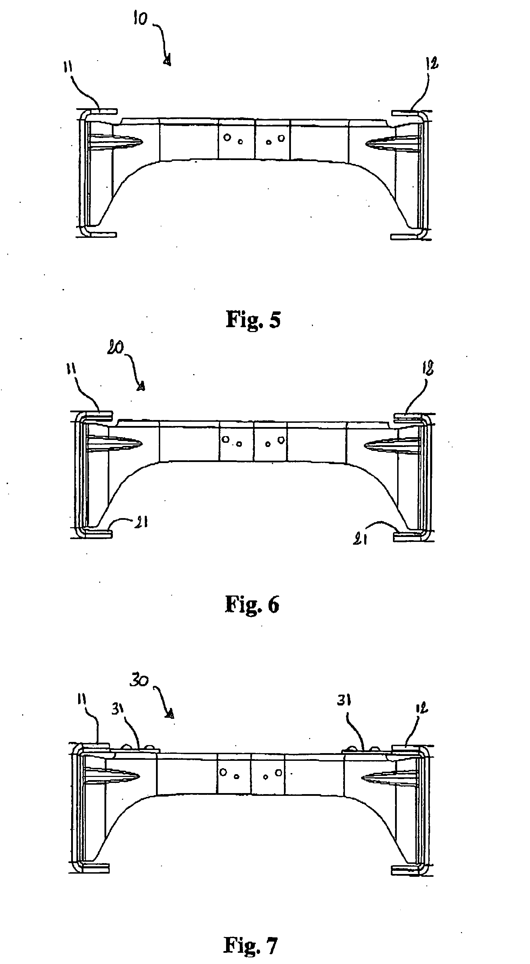

Figure 5 and 7 show a front view of the cross member indicated respectively by 10, 20 and 30 in figure 4.

Therefore the cross member 10 that has to be used in the frame without reinforcing elements, as shown in figure 5, will be folded according to the folding line A of figure 3, while the cross members 20 and 30 that have to be used in the frame with the reinforcing elements indicated by 21 and 31, will have the extremities connected to the flanges folded along the folding line B of figure 3.

In this second case the cross member will by shorter and this difference in length corresponds to the thickness of the reinforcement element inserted during the assembling.

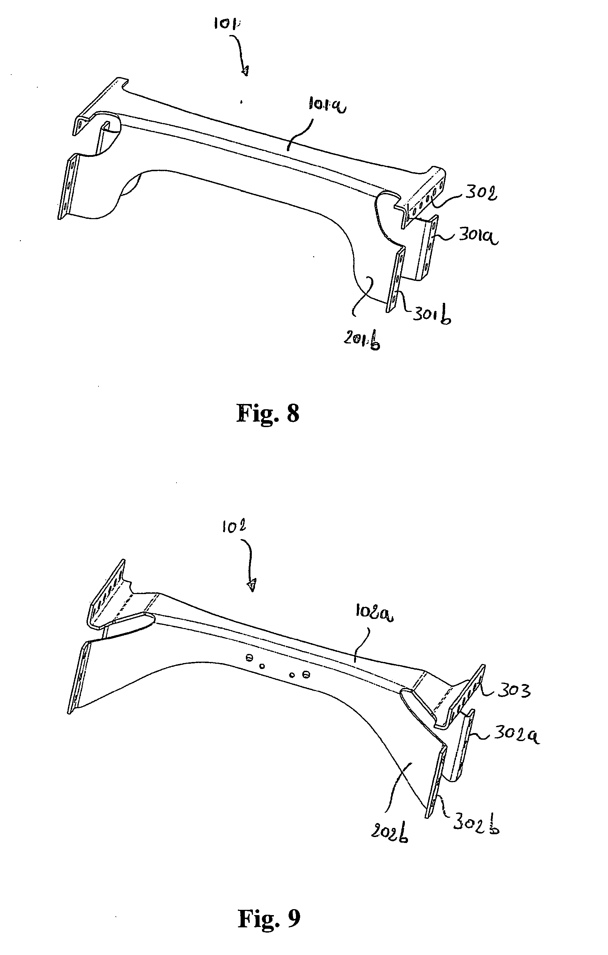

Figures 8 and 9 show a possible alternative embodiment of the cross member according to this invention.

In particular, figure 8 shows a cross member 101 comprising a main body 101 a which is joined at its extremities to the flanges 301 a, 301 b in a way similar to the embodiment described above, and it comprises also a further flange transversally developed 302.

Similarly, figure 9 shows a cross member 102 comprising a main body 102a which is joined at its extremities to the flanges 302a, 302b and to a flange transversally developed 303.

All these and numerous other possible cross member forms are obtainable by simply varying the form of the preformed plate and by preparing appropriate folding lines. The cutting of the plate and the following folding of the plate along the appropriately prepared folding lines make it possible to obtain any desired form both of the cross member main body and of the flanges used for the assembling to the side members of the frame.

Therefore it has been shown that the method for the construction of a cross member according to the present invention achieves the purpose and the objects proposed.

In particular, it has been shown that the method according to this invention allows to obtain in a simple and advantageous way, in terms of industrial mass production, cross members of different dimensions and profiles.

More in detail, the method according to this invention allows to obtain a cross member made of a single piece, as to remove the complex welding operation of more components, as in the manufacturing procedures of the cross members known in the art.

It will be apparent to the person skilled in the art that various modifications can be conceived and reduced to practice without departing from the scope of the invention.

Therefore, the scope of the claims is not limited to the illustrations or the preferred embodiments shown in the description as an example, but rather the claims include all the patentable novelties deriving from the present invention, including all the equivalent embodiments for a person skilled in the art.

## Claims

1. Method for realizing a stiffening cross member (1) of a vehicle frame, said cross member comprising a main body (1 a) having sides (4), and flanges (2a, 2b, 2c, 2d) for the connection to said frame, said method comprising the following steps:
- prepare a preformed plate comprising suitable predetermined folding lines (A, B, C, D) and suitable predetermined cutting lines (a,b,c,d);
- cut said preformed plate according to the predetermined cutting lines (a, b, c, d);
- fold the cut plate according to said folding lines (A, B, C, D), as to obtain said cross member in a single piece,
wherein each of said cutting lines (a, b, c, d) defines a different lower profile (4a) of the sides (4) of said cross member (1) and said step of plate folding following the predefined folding lines (A, B, C, D) allows to obtain different longitudinal dimensions of the cross member according to the folding line followed.

2. Vehicle frame **characterized in that** it comprises a cross member obtained by the method according to claim 1.

3. Vehicle frame according to claim 2, **characterized in that** said cross member is directly connected to the frame.

4. Vehicle frame according to claim 2, **characterized in that** said cross member is connected to the frame by means of reinforcing elements (21, 31).

5. Vehicle comprising a frame according to the claim 4.

## Patentansprüche

1. Verfahren zum Verwirklichen eines Versteifungsquerelements (1) eines Fahrzeugrahmens, wobei das Querelement einen Hauptkörper (1) mit Seiten (4) und Schenkeln (2a, 2b, 2c, 2d) für die Verbindung mit dem Rahmen umfasst, wobei das Verfahren die folgenden Schritte umfasst, dass:
- eine vorgeformte Platte bereitgestellt wird, die geeignete vorbestimmte Biegelinien (A, B, C, D) und geeignete vorbestimmte Schnittlinien (a, b, c, d) umfasst;
- die vorgeformte Platte gemäß den vorbestimmten Schnittlinien (a, b, c, d) geschnitten wird;
- die geschnittene Platte gemäß den Biegelinien (A, B, C, D) gebogen wird, um das Querelement in einem einzigen Stück zu erhalten, wobei jede der Schnittlinien (a, b, c, d) ein unterschiedliches unteres Profil (4a) der Seiten (4) des Querelements (1) definiert, und der Plattenbiegeschritt, der den vordefinierten Biegelinien (A, B, C, D) folgt, zulässt, unterschiedliche Längsabmessungen des Querelements gemäß den gefolgten Biegelinien zu erhalten.

2. Fahrzeugrahmen,
**dadurch gekennzeichnet, dass**
er ein Querelement umfasst, das durch das Verfahren nach Anspruch 1 erhalten ist.

3. Fahrzeugrahmen nach Anspruch 2,
**dadurch gekennzeichnet, dass**
das Querelement direkt mit dem Rahmen verbunden ist.

4. Fahrzeugrahmen nach Anspruch 2,
**dadurch gekennzeichnet, dass**
das Querelement mit dem Rahmen mittels Verstärkungselementen (21, 31) verbunden ist.

5. Fahrzeug, das einen Rahmen nach Anspruch 4 umfasst.

## Revendications

1. Procédé permettant de réaliser une traverse de raidissement (1) d'un châssis de véhicule, ladite traverse comprenant un corps principal (1a) comportant des côtés (4), et des brides (2a, 2b, 2c, 2d) pour le raccordement audit châssis, ledit procédé comprenant les étapes suivantes consistant à :
- préparer une plaque préformée comprenant des lignes de pliage (A, B, C, D) prédéterminées appropriées et des lignes de découpe (a, b, c, d) prédéterminées appropriées ;
- couper ladite plaque préformée selon les lignes de découpe (a, b, c, d) prédéterminées ;
- plier la plaque découpée selon lesdites lignes de pliage (A, B, C, D), de façon à obtenir ladite traverse d'un seul tenant,
où chacune desdites lignes de découpe (a, b, c, d) définit un profil inférieur différent (4a) des côtés (4) de ladite traverse (1) et ladite étape de pliage de plaque suivant les lignes de pliage (A, B, C, D) prédéfinies permet d'obtenir des dimensions longitudinales différentes de la traverse selon la ligne de pliage suivie.

2. Châssis de véhicule **caractérisé en ce qu'**il comprend une traverse obtenue par le procédé selon la revendication 1.

3. Châssis de véhicule selon la revendication 2, **caractérisé en ce que** ladite traverse est directement raccordée au châssis.

4. Châssis de véhicule selon la revendication 2, **caractérisé en ce que** ladite traverse est raccordée au châssis au moyen d'éléments de renforcement (21, 31).

5. Véhicule comprenant un châssis selon la revendication 4.
